# EUROPÄISCHE PATENTSCHRIFT

(11) **EP 1 065 779 B1**
(45) Veröffentlichungstag und Bekanntmachung des Hinweises auf die Patenterteilung: **23.11.2005**
(21) Anmeldenummer: 00113297.6
(22) Anmeldetag: 21.06.2000
(51) Int. Cl.: H02K 5/20

(54) **Luftgekühlte elektrische Maschine**
Electric air-cooled machine
Machine électrique refroidie par air

(30) Priorität: 02.07.1999 DE 19930752
(43) Veröffentlichungstag der Anmeldung: 03.01.2001
(73) Patentinhaber: SIEMENS AKTIENGESELLSCHAFT, 80333 München (DE)
(72) Erfinder: Krieg, Olaf, Dipl.-Ing., 12355 Berlin (DE)

(56) Entgegenhaltungen:
- US-A- 1 601 235
- US-A- 2 171 829
- US-A- 2 205 629
- US-A- 3 648 086
- US-A- 4 094 033
- PATENT ABSTRACTS OF JAPAN vol. 007, no. 222 (E-201), 4. Oktober 1983 (1983-10-04) & JP 58 112440 A (TOKYO SHIBAURA DENKI KK), 4. Juli 1983 (1983-07-04)
- PATENT ABSTRACTS OF JAPAN vol. 017, no. 521 (E-1435), 20. September 1993 (1993-09-20) & JP 05 137296 A (MITSUBISHI ELECTRIC CORP), 1. Juni 1993 (1993-06-01)
- PATENT ABSTRACTS OF JAPAN vol. 006, no. 115 (E-115), 26. Juni 1982 (1982-06-26) & JP 57 043536 A (HITACHI LTD), 11. März 1982 (1982-03-11)
- PATENT ABSTRACTS OF JAPAN vol. 1997, no. 09, 30. September 1997 (1997-09-30) & JP 09 121501 A (HITACHI LTD), 6. Mai 1997 (1997-05-06)
- PATENT ABSTRACTS OF JAPAN vol. 1998, no. 08, 30. Juni 1998 (1998-06-30) & JP 10 066306 A (MEIDENSHA CORP), 6. März 1998 (1998-03-06)
- PATENT ABSTRACTS OF JAPAN vol. 016, no. 465 (E-1270), 28. September 1992 (1992-09-28) & JP 04 165940 A (TOSHIBA CORP), 11. Juni 1992 (1992-06-11)
- PATENT ABSTRACTS OF JAPAN vol. 017, no. 630 (E-1463), 22. November 1993 (1993-11-22) & JP 05 199709 A (MITSUBISHI ELECTRIC CORP), 6. August 1993 (1993-08-06)

## Beschreibung

Die Erfindung betrifft eine luftgekühlte elektrische Maschine nach dem Obergegriff des Anspruchs 1.

Bei luftgekühlten elektrischen Maschinen wird der Kühlluftstrom durch einen auf der Rotorwelle befindlichen Lüfter oder durch einen Fremdlüfter erzeugt. Dabei wird der Kühlluftstrom durch oder an dem Statorblechpaket oder durch dafür vorgesehene Öffnungen im Statorblechpaket geführt. Bei optimalem Strömungsverlauf des Kühlluftstromes werden dabei außerdem die Wickelköpfe, insbesondere die des Stators mitgekühlt.

Nachteilig dabei ist, daß vor allem bei an Arbeitsmaschinen gekuppelten elektrischen Maschinen die Lagerschilde nicht im Kühlluftstrom liegen und somit zur Überhitzung neigen. Dieser Effekt des Wärmestaus wird insbesondere bei elektrischen Maschinen durch eine Flanschbauform und/oder hohe Kühltemperatur sowie durch intensiver Wärmeeinstrahlung, z.B. einer Arbeitsmaschine oder eines Abtriebselement zusätzlich gesteigert. Ein Grund für diesen Wärmestau ist im wesentlichen die Kopplung der elektrischer Maschine mit einer Arbeitsmaschine.

Bei Überschreiten der Lagertemperatur sind entweder deutliche Schmierfristreduzierungen, teuere Sonderlager oder Sonderfette erforderlich. Im ungünstigsten Fall muß eine elektrische Maschine der nächsthöheren Leistungsgruppe der Arbeitsmaschine zugeordnet werden. In Ausnahmefällen wird ein weiterer Lüfter auf der Welle speziell für dieses Lager vorgesehen. Nachteilig bei all diesen Vorschlägen zur Behegung dieses Problems der erhöhten Lagertemperatur, sind dabei die zusätzlich anfallenden Kosten.

Aus der US 3 648 086 ist eine elektrische Maschine mit einem Kommutator bekannt, bei der ein auf der einen Stirnseite erzeugte Kühlluftstrom über den Kommutator und die elektrische Maschine streicht, wobei der Kühlluftstrom aufgeteilt ist in einen Kühlluftstrom durch den Stator und einen Kühlluftstrom durch den Rotor, die auf der anderen Seite der elektrischen Maschine zusammengeführt und zur Lagerkühlung herangezogen werden.

Aus der JP 600 20 751 est eine Lager mit einem Sensor bekannt, der die Temperatur erfaßt und über eine Ausweitevorrichtung das Lager des generators schicht.

Der Erfindung liegt demnach die Aufgabe zugrunde, eine luftgekühlte elektrische Maschine zu schaffen, die bei verschiedenen Schutzklassen elektrischer Maschinen eine ausreichende Kühlung der Lager gewährleistet. Der konstruktive Eingriff in bestehende Maschinenkonzepte soll dabei auch aus Kostengründen auf ein Minimum reduziert werden.

Die Lösung der gestellten Aufgabe gelingt durch den kennzeichnenden Teil des Anspruchs 1

Die elektrische Maschine ist luftgekühlt, d.h. Kühlluft durchströmt bzw. umströmt wahlweise oder in Abhängigkeit der Schutzklasse der elektrische Maschine das Gehäuse, die Stator- oder Rotornuten, Kühlnuten im Blechpaket und die Wickelköpfe. Speziell ausgebildete Elemente, wie z.B. Kühlrippen oder wärmeleitende Materialien vorzugsweise im Bereich der Isolation verstärken dort den Kühleffekt. Ein Kühlluftstrom wird durch Eigenbelüftung, vorzugsweise einen oder mehrere auf die Rotorwelle gekoppelte Lüfter oder durch die an sich bekannten Ausführungsformen der Fremdbelüftung erzeugt. Ebenso verursacht die natürliche Konvektion insbesondere am Gehäuse der elektrischen Maschine einen Kühlluftstrom. Der auf die beschriebene Art und Weise erzeugte Kühlluftstrom wird zumindest teilweise auf das Lager (bei einer fliegend gelagerten Rotorwelle) oder die Lager gelenkt.

Bei einer Rotorwelle, deren Lager sich in der Arbeitsmaschine befinden, kann der Kühlluftstrom auch dorthin gelenkt werden.

Dabei erfolgt eine Umlenkung des Kühlluftstromes oder der Kühlluftströme durch Leitvorrichtungen. Da vor allem ein auf der dem Lüfter abgewandten Seite der elektrischen Maschine befindliches Lager der Kühlung bedarf, sind die Leitvorrichtungen danach ausgerichtet.

Die erwärmte Luft strömt nach der Kühlung des Lagers nach außen. Das Lager befindet sich in einem Flansch oder einem konventionellen Lagerschild. Die Leitvorrichtungen lenken zumindest einen Teil des Kühlluftstroms auf den Flansch oder das Lagerschild, so dass sich durch den Wärmeübergang zwischen Lagerhülse und Flansch oder Lagerhülse und Lagerschild ein weiterer Kühleffekt einstellt. Sensoren am Lager nelden einer Regeleinrichtung einen Anstieg der Lagertemperatur, so dass die Leitvorrichtung dementsprechend neu positioniert, oder der Kühlluftstrom erhöht wird.

In einer weiteren Ausführungsform wird der Kühlluftstrom oder zumindest ein Teilkühlluftstrom auf den Flansch oder das Lagerschild gelenkt, in dem das zu kühlende Lager angeordnet ist und führt dort durch Flanschöffnungen, Blenden oder Ausnehmungen zur verstärkten Kühlung des Lagers. Die Luft kann von dort ebenfalls über Öffnungen eines Kupplungsraums zwischen elektrischer Maschine und Arbeitsmaschine oder anderen Öffnungen z.B. des Maschinengehäuses im Bereich des Lagers, durch Überdruck in die Umgebung entweichen. Damit wird die vorhandene Lüftung der elektrischen Maschine wesentlich besser ausgenutzt, ohne zusätzliche Verluste zu erzeugen, die z.B. durch einen Zusatzlüfter entstehen, der zu einer Wirkungsgradreduzierung der elektrischen Maschine führt. Außerdem führt ein Zusatzlüfter zu weiteren Geräuschemissionen. Auf zusätzliche Bauteile kann nahezu verzichtet werden. Es stellt sich, wie Versuche gezeigt haben, ein verbesserter Strömungsverlauf insbesondere über das Gehäuse der elektrischen Maschine ein.

Der Flansch oder das Lagerschild besteht vorzugsweise aus vergleichsweise gut wärmeleitendem Material und ist zur weiteren Verbesserung der Kühlung mit besonders geeigneten wärmeabgebenden Elementen wie z.B. Rippen oder anderen zum Wärmeaustausch geeigneten Elementen versehen.

In einer weiteren Ausführungsform weist der Flansch spezielle Öffnungen oder Ausnehmungen auf, um den Kühlluftstrom zu führen und um dadurch eine besonders effiziente Lagerkühlung zu erreichen. Zusätzliche Blenden oder Leitbleche im Bereich des Flansches oder des Lagerschildes führen zu einer weiteren Verbesserung der Kühlung, ohne den Strömungswiderstand nachhaltig zu beeinträchtigen.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert. Dabei zeigen:
- FIG 1: einen Teillängsschnitt einer elektrischen Maschine.
- FIG 2: einen Teilquerschnitt einer elektrischen Maschine.

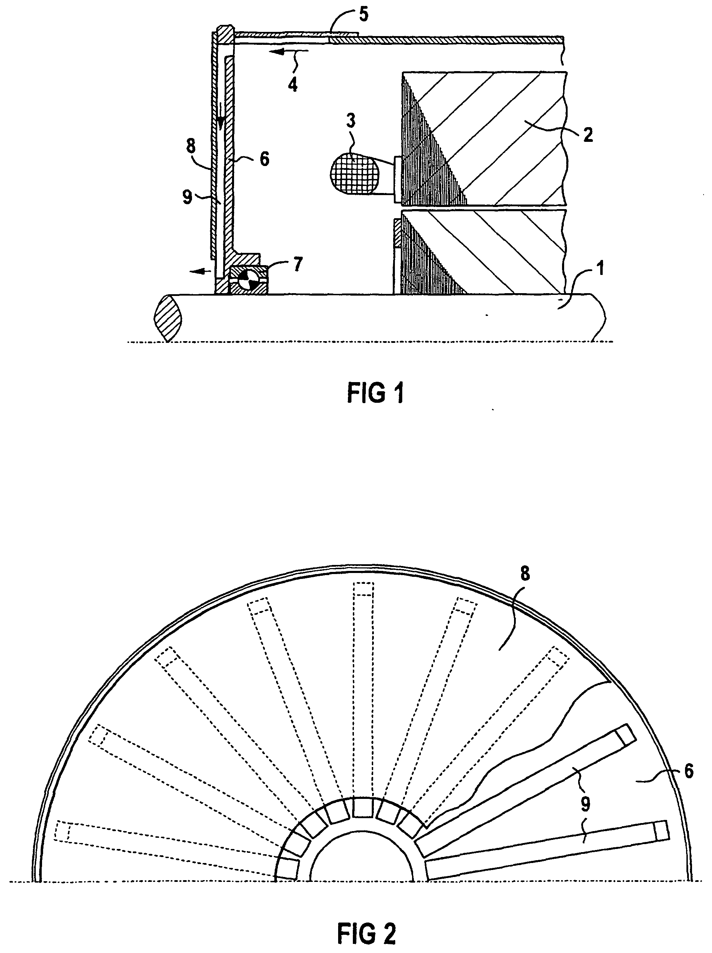

FIG 1 zeigt eine luftgekühlte elektrische Maschine mit einem Statorblechpaket 2 und den darin befindlichen nicht näher dargestellten Wicklungen. Die Wickelköpfe 3 dieser Wicklungen werden durch einen Kühlluftstrom 4, der durch einen nicht näher dargestellten Eigen- oder Fremdlüfter erzeugt wird, unter anderem gekühlt. Der Kühlluftstrom 4 streicht sowohl entlang dem Statorblechpaket 2 als auch, falls vorhanden, durch spezielle Öffnungen im Statorblechpaket 2 oder durch dort vorhandene Nuten, in denen sich die Wicklung befindet. Dabei kann die Wärme direkt vom Entstehungsort abgeführt werden. Durch ein Leitblech 5 wird der Kühlluftstrom 4 in Richtung Maschinenachse 1 gelenkt und kühlt somit das im Flansch 6 befindliche Lager 7. Falls der Flansch 6 axial durchgehende Öffnungen oder Ausnehmungen 9 aufweist, wird die Kühlwirkung durch ein Deckblech 8 verbessert, das den Kühlluftstrom 4 radial in Richtung Maschinenachse 1 lenkt und damit zur verstärkten Kühlung des Lagers 7 beiträgt. Im Bereich der Maschinenachse 1 ist das Deckblech 8 radial etwas zurückgesetzt, so dass sich der Kühlluftstrom 4 axial im Bereich der Maschinenachse 1 fortsetzen kann. Dabei wird der Kühlluftstrom 4 entweder direkt über radiale Ausnehmungen des Flansches nach außen gegeben oder er tritt durch Öffnungen 9 in eine nicht näher dargestellte Kupplungsglocke, mit der die elektrische Maschine an die Arbeitsmaschine gekoppelt ist, nach außen. Durch die verbesserte Kühlung ergibt sich ein günstigerer Strömungsverlauf über das Gehäuse, so dass eine Staudruckreduzierung am Flansch 6 eintritt.

Die erfindungsgemäße Kühlung der Lager 7 beeinträchtigt in keinerlei Weise die Schutzart der elektrischen Maschine. Sie ist sowohl bei durchzugsbelüfteten Maschinen (IP 23) als auch bei geschlossenen elektrischen Maschinen(IP 44) und für höhere Schutzarten geeignet. Die Lebensdauer der Schmierstoffe des Lagers wird dadurch wesentlich verlängert.

## Patentansprüche

1. Luftgekühlte elektrische Maschine mit einem Stator, einem Rotor und mit einer zumindest in einem Lager gelagerten Rotorwelle, wobei Mittel vorhanden sind, die einen im wesentlich axial gerichteten Kühlluftstrom (4) zumindest teilweise zur Kühlung des Lagers (7) der Rotorwelle (1) vorsehen, wobei eine Eigen- oder Fremdkühlung vorgesehen ist und wobei durch Leitvorrichtungen (8) auf der einem Lüfter abgewandten Seite der elektrischen Maschine eine zumindest teilweise Umlenkung des Kühlluftstroms (4) auf das Lager (7) erfolgt, **dadurch gekennzeichnet**

2. Luftgekühlte elektrische Maschine nach Anspruch 1, **dadurch gekennzeichnet , dass** das Lager (7) in einem Flansch (6) oder Lagerschild angeordnet ist.

3. Luftgekühlte elektrische Maschine nach Anspruch 2, **dadurch gekennzeichnet , dass** der Flansch (6) und/oder das Lagerschild auf der dem Lüfter abgewandten Seite der elektrische Maschine axial und/oder radial gerichtete Öffnungen und/oder Ausnehmungen (9) aufweist, um den Kühlluftstrom (4) zu leiten.

4. Luftgekühlte elektrische Maschine nach Anspruch 3, **dadurch gekennzeichnet, dass** die Öffnungen (9) des Flansches (6) und/oder Lagerschild zumindest teilweise von einem Deckblech (8) abgedeckt sind. dass am Lager (7) Sensoren vorhanden sind, die einer Regeleinrichtung einen Anstieg der Lagertemperatur melden, so dass die Leitvorrichtung (8) dementsprechend ein positioniert oder der Kühlluftstrom erhölt wird.

5. Luftgekühlte elektrische Maschine nach einem oder mehreren der vorhergehenden Ansprüche , **dadurch ge- kennzeichnet,** dass die elektrische Maschine über eine Vorrichtung an zumindest eine Arbeitsmaschine koppelbar ist.

6. Luftgekühlte elektrische Maschine nach Anspruch 5,
**dadurch gekennzeichnet, dass** die elektrische Maschine über eine Kupplungsglocke an eine Arbeitsmaschine gekoppelt ist, welche Kupplungsglocke am Umfang verteilt Luftaustrittsöffnungen aufweist.

7. Luftgekühlte elektrische Maschine nach Anspruch 6, **dadurch gekennzeichnet, dass** die Luftaustrittsöffnungen derart geformt sind, dass sich eine Sogwirkung im Bereich des Flansches (6) und/oder Lagerschildes einstellt.

8. Luftgekühlte elektrische Maschine nach Anspruch 1 oder 2, **dadurch gekennzeichnet, dass** die Kühlluft im wesentlichen über die Öffnungen und/oder Ausnehmungen (9) zu- bzw. abströmt.

## Claims

1. Air-cooled electrical machine with a stator, a rotor and with a rotor shaft supported by at least one bearing, in which means are present which provide an essentially axially directed cooling air stream (4) at least partly for cooling the bearing (7) of the rotor shaft (1), whereby
self-cooling or separate cooling is provided, and whereby guides (8) on the side of the electrical machine facing away from the fan at least partly reroute the cooling air stream (4) onto the bearing (7),
**characterized in that** sensors are present on the bearing which notify a control device of a rise in the bearing temperature, so that the guides (8) are repositioned accordingly or the cooling air stream is increased.

2. Air-cooled electrical machine in accordance with claim 1,
**characterized in that** the bearing (7) is arranged in a flange (6) or bearing end plate.

3. Air-cooled electrical machine in accordance with claim 2,
**characterized in that** the flange (6) and/or the bearing end plate features axially and/or radially directed openings and/or cutouts (9) on the side of the electrical machine facing away from the fan to direct the cooling air stream (4).

4. Air-cooled electrical machine in accordance with claim 3,
**characterized in that** the openings (9) of the flange (6) and/or bearing end plate are at least partly covered by a cover plate (8).

5. Air-cooled electrical machine in accordance with one or more of the previous claims, **characterized in that** the electrical machine can be coupled via a device to at least one machine tool.

6. Air-cooled electrical machine in accordance with claim 5,
**characterized in that** the electrical machine is coupled via a coupling bell housing to a machine tool, said bell housing featuring air outlet openings around its circumference.

7. Air-cooled electrical machine in accordance with claim 6,
**characterized in that** the air outlet openings are formed such that a suction effect is produced in the area of the flange (6) and/or bearing end plate.

8. Air-cooled electrical machine in accordance with claim 1 or 2, **characterized in that** the cooling air essentially flows in or out via the openings and/or cutouts (9).

## Revendications

1. Machine électrique à refroidissement par de l'air comprenant un stator, un rotor et au moins un arbre de rotor monté dans un palier, des moyens étant présents qui donnent un courant (4) d'air de refroidissement dirigé sensiblement axialement au moins en partie pour refroidir le palier (7) de l'arbre (1) du rotor, dans lequel un refroidissement propre ou extérieur est prévu et dans lequel, par des dispositifs (8) de déviation, le côté, éloigné d'un ventilateur, de la machine électrique effectue au moins en partie une déviation du courant (4) de l'air de refroidissement sur le palier (7), **caractérisée en ce qu'**il y a sur le palier (7) des capteurs qui indiquent à un dispositif de régulation une élévation de la température du palier, de sorte que les dispositifs (8) de déviation sont repositionnés en conséquence ou que le courant d'air de refroidissement est augmenté.

2. Machine électrique à refroidissement par de l'air suivant la revendication 1, **caractérisée en ce que** le palier (7) est monté dans une joue (6) ou dans un flasque.

3. Machine électrique à refroidissement par de l'air suivant la revendication 2, **caractérisée en ce que** la joue (6) et/ou le flasque ont, du côté éloigné du ventilateur de la machine électrique, des ouvertures et/ou des évidements (9) dirigés axialement et/ou radialement pour conduire le courant (4) d'air de refroidissement.

4. Machine électrique à refroidissement par de l'air suivant la revendication 3, **caractérisée en ce que** les ouvertures (9) de la joue (6) et/ou du flasque sont recouvertes au moins en partie d'une tôle (8) de couverture.

5. Machine électrique à refroidissement par de l'air suivant l'une ou plusieurs des revendications précédentes, **caractérisée en ce que** la machine électrique peut être accouplée par un dispositif à au moins une machine fournissant du travail.

6. Machine électrique à refroidissement par de l'air suivant la revendication 5, **caractérisée en ce que** la machine électrique est accouplée par une cloche d'accouplement à la machine fournissant du travail, cloche d'accouplement qui a des ouvertures de sortie d'air réparties sur le pourtour.

7. Machine électrique à refroidissement par de l'air suivant la revendication 6, **caractérisée en ce que** les ouvertures de sortie de l'air sont conformées de manière à établir un effet d'appel d'air dans la zone de la joue (6) et/ou du bouclier thermique.

8. Machine électrique à refroidissement par de l'air suivant la revendication 1 ou 2, **caractérisée en ce que** l'air de refroidissement arrive et sort pour l'essentiel par les ouvertures et/ou les évidements (9).
